Europäisches Patentamt

European Patent Office

Office européen des brevets

(11) Numéro de publication: **0 270 395 B1**

# FASCICULE DE BREVET EUROPEEN

(45) Date de publication de fascicule du brevet:
**18.12.91**

(51) Int. Cl.⁵: **C01F 7/58**, B01D 7/02

(21) Numéro de dépôt: **87402365.8**

(22) Date de dépôt: **21.10.87**

(54) **Granulés de chlorure d'aluminium et procédé pour les obtenir.**

(30) Priorité: **31.10.86 FR 8615171**

(43) Date de publication de la demande:
**08.06.88 Bulletin 88/23**

(45) Mention de la délivrance du brevet:
**18.12.91 Bulletin 91/51**

(84) Etats contractants désignés:
**AT BE CH DE ES FR GB GR IT LI LU NL SE**

(56) Documents cités:
**DE-B- 1 123 294**
**FR-A- 1 549 271**
**US-A- 1 641 503**
**US-A- 3 930 800**

(73) Titulaire: **ATOCHEM**
**4 & 8, Cours Michelet La Défense 10**
**F-92800 Puteaux(FR)**

(72) Inventeur: **Dugua, Jacques**
**241 Chemin des Flachères**
**F-69390 Charly Par Vernaison(FR)**

Rank Xerox (UK) Business Services

## Description

La présente invention concerne de nouveaux granulés de chlorure d'aluminium anhydre et un procédé pour produire ces granulés.

Le chlorure d'aluminium est utilisé souvent comme catalyseur en chimie organique et aussi dans l'industrie des cosmétiques. En cours de fabrication le chlorure d'aluminium est obtenu en phase gazeuse éventuellement mélangé à d'autres produits et on l'isole en le condensant sur une paroi froide à température ambiante. On obtient ainsi une croûte de chlorure d'aluminium qu'on décolle de la paroi par des moyens mécaniques tels que vibrations, chocs. La paroi froide est simplement la paroi intérieure d'un réservoir en acier exposé à l'air ambiant.

Les croûtes de chlorure d'aluminium sont broyées pour obtenir un produit dont les morceaux de formes diverses sont inférieurs à 5 cm dans leur plus grande dimension. Le broyage produit de la poussière, il faut tamiser le chlorure d'aluminium et recycler les fines. Les demandes de brevets japonais 34988/70 et 34989/70 du 23 Avril 1970, la demande japonaise 42243/70 du 18 Mai 1979 décrivent un procédé pour isoler le chlorure d'aluminium en phase gazeuse consistant à faire passer le gaz sur une paroi maintenue à 80 ou 85° C, puis quand le chlorure d'aluminium a formé des cristaux, on réchauffe cette paroi à 220° C pour décoller le chlorure d'aluminium qu'on récupère. Souvent ces cristaux, lors de leur formation et leur grossissement, ont tendance à coller entre eux et à former une croûte qu'il est nécessaire de broyer et tamiser.

On a maintenant trouvé un nouveau granulé de chlorure d'aluminium caractérisé en ce qu'il a essentiellement la forme d'un cône.

Le hauteur du cône est de préférence comprise entre 0,5 et 5 cm et le rapport hauteur sur diamètre à la base est compris entre 1 et 10.

La présente invention concerne aussi un procédé pour obtenir ces granulés.

Le procédé est caractérisé en ce qu'un courant gazeux comprenant du chlorure d'aluminium est mis en contact avec une paroi dont la température est inférieure à 70° C, ladite paroi étant ensuite réchauffée pour que les granulés se détachent.

Ce procédé s'applique à tous les gaz contenant du chlorure d'aluminium, et plus particulièrement à ceux obtenus au cours de sa fabrication.

Au cours de la fabrication du chlorure d'aluminium on obtient dans l'une des étapes des procédés utilisés, le chlorure d'aluminium sous forme d'un gaz en mélange avec d'autres gaz qui peuvent être des inertes, tels que de l'azote ou de l'air ou des résidus de réaction tels que du gaz carbonique, de l'oxyde de carbone, du chlore, des produits chlorés, etc ... Ce peut être une étape d'un procédé de fabrication du chlorure d'aluminium en tant que tel, ou une étape d'un procédé au cours duquel on prépare du chlorure d'aluminium en vue de fabriquer de l'aluminium.

Ce gaz contenant le chlorure d'aluminium est mis en contact avec une paroi froide dont la température est inférieure à 70° C.

Le chlorure d'aluminium se dépose sur la paroi froide sous la forme de granulés ayant le forme d'un cône, puis en réchauffant la surface, les granulés se détachent et on peut les recueillir par gravité.

On peut utiliser comme paroi froide la surface extérieure d'un volume quelconque mais de préférence un parallélépipède dont l'une des dimensions est petite par rapport aux deux autres, c'est-à-dire qui a la forme d'une plaque plus ou moins épaisse. La disposition de la paroi froide peut être quelconque, en effet seule la température est essentielle pour obtenir ces cônes de chlorure d'aluminium, mais pour faciliter le décollement et la récupération des cônes on préfère que la paroi soit proche de la verticale, on recueille donc facilement les cônes par gravité dès qu'on les a décollés.

Si on utilise une plaque verticale la plus grande partie de la surface est donc verticale, il reste une petite surface en bas et une autre en haut de la plaque. Les cônes de chlorure d'aluminium qui sont sur la petite surface en bas peuvent tomber sans problème, par contre ceux sur la surface du haut ne peuvent pas tomber facilement.

Si on veut éviter une intervention manuelle ou un dispositif mécanique, on supprime cette surface horizontale et on la remplace par un dièdre dont l'arête est en partie haute. Au lieu des plaques, on peut utiliser tout volume (1) ayant la plus grande partie de sa surface extérieure essentiellement verticale (2) dont les parties supérieures sont des arêtes vives ou arrondies, c'est-à-dire n'ayant pas de surface horizontale où le chlorure d'aluminium pourrait se déposer sur le dessus et (3) dont les seules surfaces horizontales possibles sont essentiellement en bas du volume, là ou le chlorure d'aluminium se dépose en dessous de la surface.

Cette paroi froide peut être disposée à l'intérieur d'une capacité (ou d'un réservoir) qu'on alimente en gaz contenant le chlorure d'aluminium.

Il est commode d'utiliser comme paroi froide la paroi intérieure d'une capacité ayant une double enveloppe.

Le gaz contenant le chlorure d'aluminium étant introduit dans cette capacité, le chlorure d'aluminium se dépose en granulés coniques sur la paroi froide et les incondensables sont dégazés de préférence par un orifice différent de l'entrée des gaz contenant le chlorure d'aluminium. La paroi peut être en matériau quelconque pourvu qu'il résiste au chlorure d'aluminium ; on utilise de préférence de l'acier ordinaire, de l'acier inoxydable ou un alliage à base de nickel. On préfère aussi que la paroi soit lisse.

La température de la paroi est maintenue inférieure à 70°C à l'aide d'un fluide caloporteur. Si on utilise comme paroi la surface extérieure d'un volume, on met avantageusement dans le volume un fluide caloporteur ; si on utilise la paroi intérieure d'une capacité ayant une double enveloppe on met avantageusement un fluide caloporteur dans cette double enveloppe. On peut utiliser un fluide caloporteur quelconque tel qu'un gaz, un produit organique, de l'eau chaude, de la vapeur basse pression ...

Quand on utilise une paroi métallique la température du fluide est très voisine de la température de la paroi. Il suffit alors pour ajuster la température de la paroi, d'ajuster la température du fluide caloporteur. La température de la paroi est maintenue avantageusement entre 10 et 70°C et de préférence entre 40 et 60°C. On préfère aussi que la température de la paroi soit maintenue constante pendant la condensation du chlorure d'aluminium.

La pression du gaz contenant du chlorure d'aluminium est sans importance, de même que la pression dans la capacité. Presque toujours ce gaz est à la pression atmosphérique ou très proche, et on effectue la condensation du chlorure d'aluminium à cette pression. Dès que le chlorure d'aluminium est en contact avec la paroi froide, il se condense sous forme de granulés coniques, la pointe du cône étant contre la paroi froide. Les cristaux se touchent essentiellement par leur base mais ne sont en général ni collés ni agglomérés entre eux. Le chlorure d'aluminium ainsi obtenu ne forme pas une croûte continue et on peut voir la paroi entre les cônes, à travers les vides entre les bases des cônes. Dès qu'on a obtenu cet arrangement de cônes de chlorure d'aluminium, on élève la température de la paroi précédemment froide pour que la pointe du cône de chlorure d'aluminium se liquéfie ou se sublime, ce qui provoque le détachement du cône par gravité. On obtient une liquéfaction ou une sublimation selon que la pression est supérieure ou inférieure à celle du point triple (2,3 atm abs). On préfère que le cône se détache sous l'effet de la sublimation. Il suffit de chauffer la paroi un court instant seulement pour provoquer le décollement du granulé. Le plus souvent on chauffe entre 220 et 250°C.

Pour chauffer la paroi on peut utiliser un fluide caloporteur qu'on chauffe à la température suffisante pour que la paroi soit assez chaude pour liquéfier ou sublimer le chlorure d'aluminium. On peut utiliser le même fluide caloporteur que celui qui porte la paroi en dessous de 70°C mais dont on change la température par tout moyen connu ;

on peut aussi avoir un réservoir de fluide chaud et un réservoir de fluide froid, ces deux fluides pouvant être identiques ou différents, et on les fait circuler alternativement contre la paroi.

Pendant qu'on réchauffe la paroi pour décoller le chlorure d'aluminium on peut arrêter l'introduction du gaz contenant le chlorure d'aluminium dans la capacité pour éviter de perdre du produit. On recueille du chlorure d'aluminium sous la forme de cônes, sans poussière ; ces cônes sont à une température très voisine de celle de la paroi froide pendant leur dépôt (cristallisation). On peut donc les stocker et en particulier les mettre en fûts sans avoir à les refroidir. Il est préférable de chauffer rapidement la paroi pour ne pas chauffer tout le granulé. Il n'est pas nécessaire de tamiser les granulés, il n'y a donc pas à recycler des fines. Pendant le chauffage qui provoque le décollage des cônes de chlorure d'aluminium de la paroi il peut se sublimer un peu de chlorure d'aluminium ; il est donc intéressant que ce chlorure d'aluminium puisse se déposer sur une paroi froide, par exemple dans une autre capacité reliée à la précédente. Il est commode si on doit traiter un courant gazeux continu contenant du chlorure d'aluminium, de prévoir au moins deux capacités, l'une ayant une paroi froide, l'autre étant en chauffage pour décoller le chlorure d'aluminium ; et on alterne ensuite les fonctions des capacités. On pourrait aussi avoir un nombre quelconque de capacités. Au lieu d'une capacité dont on utilise la paroi froide intérieure pour recueillir le chlorure d'aluminium, on peut avoir des parois froides disposées de façon quelconque dans des capacités, ou autres volumes ou disposées sur le passage des gaz contenant le chlorure d'aluminium. On peut aussi avoir dans la même capacité des parois froides sur lesquelles se cristallise le chlorure d'aluminium et des parois chaudes avec du chlorure d'aluminium qui se décolle. Ces granulés peuvent contenir des impuretés qui étaient présentes à coté du $AlCl_3$ en phase gazeuse. L'intérêt des granulés conformes à l'invention est qu'on peut les collecter par gravité sans intervention manuelle ni dispositif mécanique.

Les exemples suivants illustrent l'invention :

EXEMPLE 1 :

On prend un tube en pyrex vertical de diamètre intérieur 150 mm et de hauteur 500 mm qu'on ferme en haut et en bas par des brides pleines en acier inoxydable. La capacité obtenue est maintenue chaude à l'aide d'un cordon électrique chauffant enroulé à l'extérieur du tube et des brides pleines.

On dispose à l'intérieur du tube une plaque verticale creuse en inox de 300 mm x 75 mm x 10 mm. Cette plaque est alimentée en fluide caloporteur par un tuyau en inox de diamètre intérieur 6 mm arrivant sur la partie haute de la plaque et qui se prolonge à l'intérieur de la plaque par un tube plongeur descendant jusqu'à la partie basse. La sortie du fluide caloporteur se fait par un piquage en partie haute de la plaque et un tuyau en inox de diamètre intérieur 6 mm. La plaque est maintenue pendue au milieu du tube par ses tuyaux d'alimentation en fluide caloporteur qui traversent le couvercle de la capacité (la bride pleine en partie haute). On ajoute sur la partie supérieure horizontale de la plaque un serpentin dans lequel circule un fluide caloporteur maintenu au dessus de 190°C pour éviter d'avoir des granulés sur cette surface horizontale haute. Ce serpentin est alimenté par 2 tuyaux en inox de diamètre intérieur 6 mm qui passent à travers le couvercle de la capacité. Le couvercle comprend en plus de l'entrée et sortie du fluide caloporteur pour la plaque et de l'entrée et sortie pour le serpentin : (1) un piquage avec un thermocouple plongeant jusqu'à l'intérieur de la capacité pour mesurer la température dans la capacité, (2) une arrivée de diamètre 12 mm pour le chlorure d'aluminium gazeux et (3) un trou d'évent.

On mesure par un thermocouple la température du fluide caloporteur en sortie de la plaque et on assimile cette température à la température de la plaque qui est la paroi sur laquelle se forment les granulés de chlorure d'aluminium.

On règle la température de la paroi à 50°C (en régulant la température du fluide caloporteur) puis on introduit pendant 4 h dans la capacité 312 g/h de chlorure d'aluminium gazeux sous la pression atmosphérique. La température dans la capacité est 165°C. Puis on chauffe rapidement le fluide caloporteur pour obtenir une température de paroi de 220°C, après environ 3 minutes tous les granulés se sont décollés de la paroi et sont tombés dans le fonds du cylindre. On démonte la bride de fonds de la capacité pour les recueillir.

EXEMPLE 2 :

On opère comme dans l'exemple 1 mais avec une température de paroi de 34°C.

EXEMPLE 3 :

On opère comme dans l'exemple 1 mais avec une température de paroi de 46°C.

Les granulés obtenus dans les exemples 1 à 3 sont des cônes de hauteur comprise entre 10 et 20 mm et dont le diamètre à la base est en moyenne 8 mm. Ils se sont parfaitement détachés les uns des autres quand ils se sont décollés de la paroi. Dans l'exemple 1 on obtient 72% de refus (en poids) au tamis de 4 mm ; 94,5% au tamis de 2 mm et 97,7% au tamis de 1,2 mm.

EXEMPLE 4 (Comparatif) :

On opère comme dans l'exemple 1 mais avec une température de paroi qui n'est pas conforme à l'invention : 81°C.

EXEMPLE 5 (Comparatif) :

On opère comme dans l'exemple 1 mais avec une température de paroi qui n'est pas conforme à l'invention : 120°C.

Dans les exemples 4 et 5 le chlorure d'aluminium se condense en batonnets et granulés de forme quelconque qui adhèrent les uns aux autres au point de former des croûtes ou des plaques compactes qu'il faut broyer.

**Revendications**

1. Procédé dans lequel, pour obtenir à partir d'un courant gazeux contenant du chlorure d'aluminium des granulés de chlorure d'aluminium ayant essentiellement la forme d'un cône, ledit courant gazeux est mis en contact avec une paroi dont la température est inférieure à 70°C et qu'on réchauffe cette paroi pour que les granulés se détachent.

2. Procédé selon la revendication 1 caractérisé en ce que la température de la paroi est comprise entre 10 et 70°C et de préférence entre 40 et 60°C pendant que se forment les granulés.

3. Procédé selon l'une des revendications 1 ou 2 caractérisé en ce que la température de la paroi est maintenue constante pendant que se forment les granulés.

4. Procédé selon l'une des revendications 1 à 3 caractérisé en ce que pour détacher les granulés, on chauffe la paroi au-dessus de la température de sublimation du chlorure d'aluminium.

5. Procédé selon la revendication 4 caractérisé en ce que pour détacher les granulés, on chauffe la paroi de préférence entre la température de sublimation du chlorure d'aluminium et 250°C.

6. Procédé selon l'une des revendications 1 à 3 caractérisé en ce que pour détacher les granulés, on chauffe la paroi au dessus de la température de fusion du chlorure d'aluminium.

7. Granulé de chlorure d'aluminium caractérisé en ce qu'il a essentiellement la forme d'un cône et qu'il est obtenu selon le procédé de l'une quelconque des revendications 1 à 6.

8. Granulé selon la revendication 7 caractérisé en ce que la hauteur du cône est comprise entre 0,5 et 5 cm et que le rapport hauteur sur diamètre à la base est compris entre 1 et 10.

## Claims

1. Process in which, to obtain aluminium chloride granules which are essentially conical in shape from a stream of gas containing aluminium chloride, the said stream of gas is brought into contact with a wall, the temperature of which is below 70°C, and this wall is heated so that the granules become detached.

2. Process according to claim 1, characterized in that the temperature of the wall is between 10 and 70°C and preferably between 40 and 60°C while the granules are being formed.

3. Process according to either of claims 1 and 2, characterized in that the temperature of the wall is maintained constant while the granules are being formed.

4. Process according to one of claims 1 to 3, characterized in that, in order to detach the granules, the wall is heated above the sublimation temperature of aluminium chloride.

5. Process according to claim 4, characterized in that, in order to detach the granules, the wall is heated preferably to between the sublimation temperature of aluminium chloride and 250°C.

6. Process according to one of claims 1 to 3, characterized in that, in order to detach the granules, the wall is heated above the melting point of aluminium chloride.

7. Aluminium chloride granule, characterized in that it is essentially conical in shape and in that it is obtained according to the process of any one of claims 1 to 6.

8. Granule according to claim 7, characterized in that the height of the cone is between 0.5 and 5 cm and in that the height : base diameter ratio is between 1 and 10.

## Patentansprüche

1. Verfahren, bei dem zur Herstellung von Aluminiumchlorid-Granulat mit im wesentlichen konischer Form, ausgehend von einem Gasstrom, der Aluminiumchlorid enthält, dieser Gasstrom mit einer Wand in Berührung gebracht wird, deren Temperatur unterhalb 70°C liegt und diese Wand wieder erhitzt wird, damit das Granulat sich ablöst.

2. Verfahren nach Anspruch 1, dadurch gekennzeichnet, daß die Temperatur der Wand zwischen 10 bis 70°C, vorzugsweise 40 bis 60°C beträgt, während sich das Granulat bildet.

3. Verfahren nach einem der Ansprüche 1 oder 2, dadurch gekennzeichnet, daß die Temperatur der Wand während der Bildung des Granulats konstant gehalten wird.

4. Verfahren nach einem der Ansprüche 1 bis 3, dadurch gekennzeichnet, daß man zum Ablösen des Granulats die Wand auf eine Temperatur oberhalb der Sublimationstemperatur von Aluminiumchlorid erhitzt.

5. Verfahren nach Anspruch 4, dadurch gekennzeichnet, daß man zum Ablösen des Granulats die Wand vorzugsweise auf eine Temperatur zwischen der Sublimationstemperatur von Aluminiumchlorid und 250°C erhitzt.

6. Verfahren nach einem der Ansprüche 1 bis 3, dadurch gekennzeichnet, daß man zur Ablösung des Granulats die Wand auf eine Temperatur oberhalb der Schmelztemperatur von Aluminiumchlorid erhitzt.

7. Aluminiumchlorid-Granulat, dadurch gekennzeichnet, daß es im wesentlichen die Form eines Konus aufweist und gemäß dem Verfahren nach einem der Ansprüche 1 bis 6 erhalten worden ist.

8. Granulat nach Anspruch 7, dadurch gekennzeichnet, daß die Höhe des Konus 0,5 bis 5 cm und das Verhältnis von Höhe zu Basisdurchmesser 1 bis 10 beträgt.